# EUROPEAN PATENT SPECIFICATION

(11) **EP 3 342 532 B1**
(45) Date of publication and mention of the grant of the patent: **03.07.2019**
(21) Application number: 17204359.8
(22) Date of filing: 29.11.2017
(51) Int. Cl.: B23K 37/00, B23K 26/70, B23K 26/12, F16P 1/06, B23K 26/08, B23K 26/38, B23Q 11/00

(54) **CLOSURE DEVICE FOR CHAMBERS HOUSING LASER UNITS FOR SHEET METAL CUTTING**
VERSCHLUSSVORRICHTUNG FÜR KAMMERN MIT LASEREINHEITEN ZUM BLECHSCHNEIDEN
DISPOSITIF DE FERMETURE POUR DES CHAMBRES LOGEANT DES UNITÉS LASER POUR LA DÉCOUPE DE TÔLE

(30) Priority: 30.12.2016 IT 201600132646
(43) Date of publication of application: 04.07.2018
(73) Proprietor: DALLAN S.P.A., 31033 Castelfranco Veneto (IT)
(72) Inventor: DALLAN, Sergio, 31033 CASTELFRANCO VENETO (IT)
(74) Representative: Piovesana, Paolo

(56) References cited:
- EP-A1- 2 540 435
- US-A1- 2002 134 773
- US-A1- 2015 273 641

## Description

The present invention relates to a closure device for chambers housing laser units for sheet metal cutting as shown, for example, in EP 2 540 435 A1.

Sheet metal strip movement equipment is known comprising a spiked conveyor belt and a unit transversely movable with respect to the advancement of the spiked belt and supporting a laser unit. The belt housing frame surfaces, orthogonal to the advancement of the strip, are provided with slits through which the strip enters and exits the machining chamber.

However, such known equipment has the drawback of possibly reflecting the laser light which, during the machining, passes through said slits, endangering the surrounding environment.

The object of the invention is to eliminate such drawbacks and realize a closure device of the rear exit of the frame, i.e. the one facing the laser unit.

Such an object is achieved in accordance with the invention with a closure device as described in claim 1.

The present invention is further clarified hereinbelow in a preferred embodiment thereof, given by way of explanation and not by way of limitation, with reference to the accompanying drawings, in which:

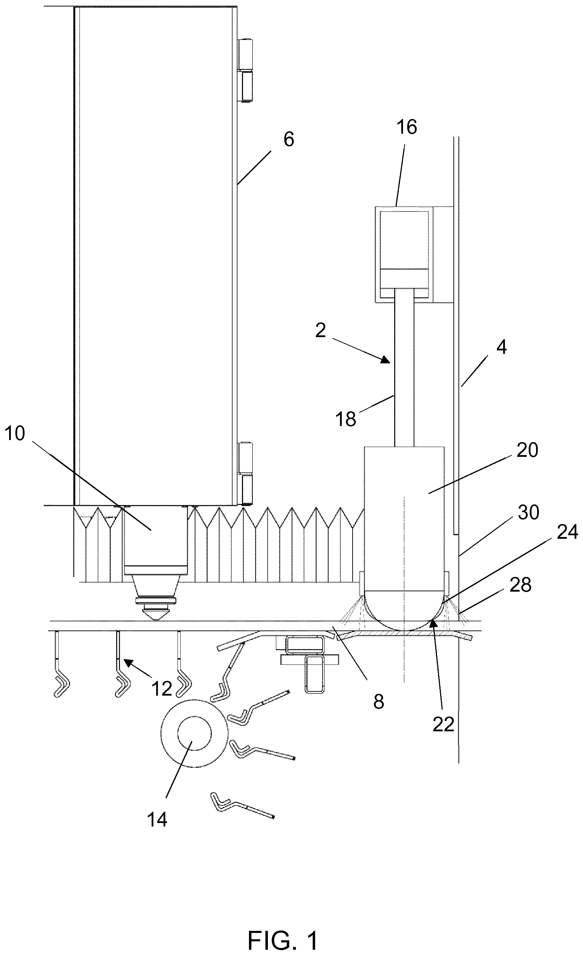

- Figure 1: shows a schematic side view of the closure device according to the invention,

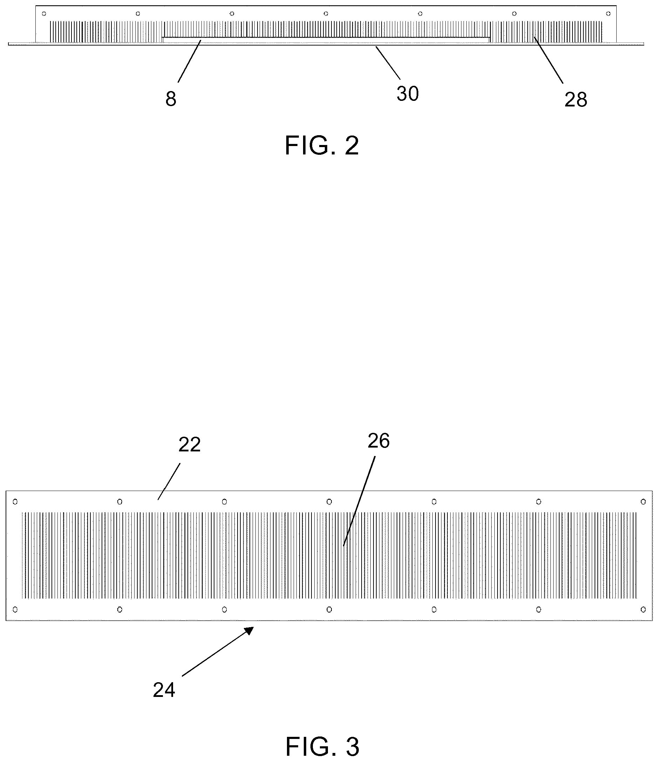

- Figure 2: shows a front view thereof,
- Figure 3: shows a plant view of the deformable metal press.

As shown in the Figures, the closure device in accordance with the invention is generally indicated by 2 and is applied at the wall 4 for the exit of the strip to be machined from the laser cutting chamber.

In particular, the chamber houses a wagon 6, movable in the advancement direction of the sheet metal strip 8 and supporting a laser cutting head 10 transversely movable with respect to said wagon.

The chamber further houses a traditional spiked conveyor belt 12 driven by an electric motor 14.

The closure device in accordance with the invention substantially comprises a cylinder 16 (pneumatic or aerodynamic) at the stem 18 thereof a parallelepiped bar 20 is applied, arranged transversely to the strip advancement axis and at the lower edges of the major side surfaces thereof the longitudinal edges 22 are bound of a U-folded steel slab 24 affected by a plurality of transverse incisions 26 halting before the edges 22.

At the ends of the bar 20 and externally to the slab 24 brushes 28 are applied.

The operation of the closure device provides that, during the laser machining, when the front end of the sheet metal sheet 8 arrives at the exit 30 of the closure wall, the descent of the stem 18 is commanded so that the incised part 26 of the slab 24 comes into contact with the sheet itself, deforming internally and at the same time ensuring an effective holding, so as to prevent any laser beams from exiting through the opening 30.

## Claims

1. A closure device (2) for chambers housing laser units for sheet metal strip cutting, **characterized in that** at the exit slit for the strip to be machined it comprises:
- a parallelepiped bar (20) arranged transversely to the strip advancement axis and the lower edges of the major side surfaces of said parallelepiped bar are bound to the longitudinal edges (22) of a U-folded steel slab (24) affected by a plurality of transverse incisions (26) halting before the edges (22),
- means (16, 18) for the vertical movement of said bar.

2. A device according to claim 1, **characterized in that** it further comprises brushes (28) bound to the edges (22) of the slab (24).

## Patentansprüche

1. Verschlussvorrichtung für Kammern mit Lasereinheiten zum Blechschneiden, **dadurch gekennzeichnet, dass** sie am Austrittsschlitz für den maschinell zu bearbeitenden Streifen umfasst:
- eine parallelepipedische Stange (20), die quer zu der Streifenvorschubachse angeordnet ist, und wobei die Unterkanten der Hauptseitenflächen der parallelepipedischen Stange an die Längskanten (22) einer U-förmig gefalteten Stahlplatte (24) gebunden sind, an der eine Vielzahl von Quereinschnitten (26) vorhanden sind, die vor den Kanten (22) enden,
- ein Mittel (16, 18) zur vertikalen Bewegung der Stange.

2. Vorrichtung nach Anspruch 1, **dadurch gekennzeichnet, dass** sie ferner Bürsten (28) umfasst, die an die Kanten (22) der Platte (24) gebunden sind.

## Revendications

1. Dispositif de fermeture (2) pour chambres logeant des unités laser pour le découpage de bandes de tôle, **caractérisé en ce qu'**il présente au niveau de la fente de sortie pour la bande à usiner :
- une barre parallélépipédique (20) disposée transversalement à l'axe d'avancement de la bande et les bords inférieurs des surfaces latérales principales de ladite barre parallélépipédique sont liés aux bords longitudinaux (22) d'une plaque en acier pliée en U (24) affectée par plusieurs incisions transversales (26) s'arrêtant avant les bords (22),
- des moyens (16, 18) pour le déplacement vertical de ladite barre.

2. Dispositif selon la revendication 1, **caractérisé en ce qu'**il comprend en outre des brosses (28) liées aux bords (22) de la plaque (24).
